# FASCICULE DE BREVET EUROPEEN

(11) **EP 1 129 993 B1**
(45) Date de publication et mention de la délivrance du brevet: **11.06.2003**
(21) Numéro de dépôt: 01400330.5
(22) Date de dépôt: 09.02.2001
(51) Int. Cl.: C01B 39/48, B01J 20/18, B01J 29/04, C10G 45/64

(54) **Zéolithe MTT comprenant des cristaux et des agrégats de cristaux et des agrégats de cristaux de granulométries spécifiques et son utilisation comme catalyseur d'isomerisation des paraffines lineaires**
Zeolith mit MTT-Stuktur enthaltend Kristalle und Kristallaggregate mit spezifischer Teilchengrössenverteilung und dessen Verwendung als Isomerisierungskatalysator von linearen Paraffinen
Zeolite with MTT-structure containing crystals and crystal aggregates with specific particle size distributions, and its use as isomerization catalyst for linear paraffins

(30) Priorité: 21.02.2000 FR 0002147
(43) Date de publication de la demande: 05.09.2001
(73) Titulaire: Institut Francais du Petrole, 92852 Rueil Malmaison Cedex (FR)
(72) Inventeur: Rouleau, Loic, 69390 Charly (FR); Kolenda, Frédéric, 69630 Chaponost (FR); Benazzi, Eric, 78400 Chatou (FR)

(56) Documents cités:
- EP-A- 0 306 181
- EP-A- 0 449 144
- EP-A- 0 462 681
- WO-A-98/16469
- US-A- 5 233 112

## Description

La présente invention concerne une zéolithe de type structural MTT se présentant sous forme de cristaux et d'agrégats de cristaux de granulométrie spécifique ainsi qu'un catalyseur comprenant une telle zéolithe. La présente invention concerne également l'utilisation dudit catalyseur dans les principaux procédés de transformation qu'utilise le raffinage et en particulier dans les procédés d'isomérisation des paraffines linéaires, destinés à améliorer la qualité de ces fractions paraffiniques afin d'être valorisées, notamment comme carburant automobile. Dans ce but, la réaction d'isomérisation permet de transformer les hydrocarbures paraffiniques à chaîne droite (paraffines normales, nP) possédant de bas indices d'octane en hydrocarbures de la même famille ramifiée (isoparaffines, iP) dont les indices d'octane sont nettement plus élevés.

La réaction d'isomérisation conduit à deux réactions secondaires, le cokage et le craquage, et les catalyseurs conventionnels utilisés pour la mise en oeuvre d'une telle réaction, à savoir des catalyseurs bifonctionnels comprenant généralement une fonction acide et une fonction hydro-déshydrogénante, manquent de sélectivité en isoparaffines au profit des réactions secondaires précitées qui constituent des pertes nettes pour la réaction recherchée.

Aussi, de manière à minimiser les réactions secondaires, la demanderesse s'est intéressée à la synthèse de nouveaux catalyseurs bifonctionnels zéolithiques, plus actifs et plus sélectifs en conversion des paraffines linéaires que les catalyseurs connus. En particulier, des caractéristiques physiques, inhérentes au catalyseur lui-même, ont été étudiées et il a été découvert que la taille des cristaux et plus précisément la taille d'agrégats formés par des cristaux de la zéolithe comprise dans ledit catalyseur ont une influence majeure sur les performances catalytiques en transformation d'hydrocarbures paraffiniques en termes d'activité et de sélectivité.

Des zéolithes à granulométrie spécifique ont déjà été décrites dans l'art antérieur. Par exemple, la demande de brevet européenne EP-A2-0 323 893 décrit une zéolithe L, pouvant être utilisée pour la conversion de charges hydrocarbonées, et présentant des agrégats de cristaux de longueur comprise entre 0,50 et 1,50 µm et de diamètre compris entre 0,2 et 0,6 µm. Il y est rapporté que la taille des agrégats dépend de l'alcalinité du mélange réactionnel lors de la préparation de la zéolithe. Dans leur demande de brevet internationale WO-93/25476, Verduijn et al. décrivent une zéolithe ZSM-5 comprenant des agrégats sous forme d'aiguille ayant une longueur moyenne maximale de 10 µm, obtenus en intervenant sur des paramètres tels que la température de cristallisation ou l'alcalinité du mélange réactionnel. D'autres auteurs (WO-93/08125) suggèrent également de contrôler la taille des cristaux et des agrégats d'un tamis moléculaire formé notamment d'une zéolithe de type MFI, MEL ou β à partir de la température de cristallisation. Il est à noter que ces demandes de brevet de l'art antérieur n'évoquent en rien la taille spécifique des cristaux et des agrégats de zéolithes en liaison avec des propriétés catalytiques particulières.

En progrès significatif, la demanderesse a mis au point un catalyseur contenant une zéolithe de type structural MTT, en particulier la zéolithe ZSM-23, ladite zéolithe présentant des cristaux et des agrégats de cristaux de taille bien déterminée, de manière à réduire au maximum la formation de produits de craquage et de coke indésirés lors des réactions d'isomérisation.

La zéolithe ZSM-23 de type structural MTT, déjà décrite dans l'art antérieur, présente un réseau microporeux monodimensionnel, dont le diamètre des pores est de 4,5 x 5,2 Å (1 Å = 1 Angström = 1.10⁻¹⁰ m) (" Atlas of Zeolites Structure types ", W.M. Meier et D.H. Olson, 4^{eme} Edition, 1996). D'autre part, A.C. Rohmann *et al* (Zeolites, 5, 352, 1985), J.L. Schlenker *et al* (private communication, 1992) et B. Marier *et al* (J. Appl. Cryst. 26; 636, 1993) ont enseigné que le réseau cristallin était de symétrie orthorombique (Pmn2_{1,} a=21,5 Å, b=11,1 Å, c=5,0 Å) possédant des canaux parallèles à l'axe c, délimités par des cycles à 10 tétraèdres. Le mode de synthèse et les caractéristiques physicochimiques de la zéolithe ZSM-23 ont été décrits dans divers brevets qui différent par la nature du structurant organique utilisé. La synthèse de cette zéolithe peut être accomplie avec la pyrrolidine (US-4 076 842), la diisopropanolamine (GB-2 190 910), les composés de diammonium quaternaire tels que le bromure d'heptaméthonium (US-4 490 342), le bromure d'octaméthonium (GB-2 202 838), le bromure de dodécaméthonium (US-5 405 596), les composés de triammonium quaternaire (US 5 332 566). Le mode de synthèse comprend le mélange d'un oxyde, généralement de silicium, et d'un oxyde, généralement d'aluminium, en présence du structurant.

D'autres zéolithes présentent la structure MTT et diffèrent de la zéolithe ZSM-23 par le mode de préparation, en particulier le structurant organique. Il s'agit de la zéolithe EU-13 (EP 0 108 486) réalisée avec un sel d'ammonium ou de phosphonium quaternaire méthylée, de la zéolithe ISI-4 (EP 0 102 497) réalisée avec l'éthylène glycol ou une monoéthanolamine, de la zéolithe SSZ-32 (US-4 483 835) réalisée avec les dérivés imidazole ou la zéolithe KZ-1 réalisée avec diverses amines (L.M. Parker *et al*, Zeolites, 3,8, 1988).

### Résumé de l'invention

La présente invention concerne une zéolithe de type structural MTT comprenant des cristaux de zéolithe MTT de taille inférieure à 5 µm, au moins une partie des cristaux de zéolithe MTT étant sous la forme d'agrégats de cristaux de zéolithe MTT, lesdits agrégats présentant une granulométne telle que la dimension Dv,90 est comprise entre 40 nm et 100 µm. L'invention concerne tout particulièrement la zéolithe ZSM-23, de type structural MTT et son utilisation comme solide acide dans la composition d'un catalyseur d'isomérisation des paraffines linéaires légères.

### Intérêt de l'invention

La zéolithe MTT, par exemple la zéolithe ZSM-23 telle que définie selon la présente invention, utilisée comme catalyseur en association avec au moins un liant, au moins un métal choisi parmi les éléments du groupe VIII de la classification périodique des éléments, présente des performances catalytiques améliorées en transformations d'hydrocarbures en termes d'activité et de sélectivité, comme par exemple en isomérisation des hydrocarbures paraffiniques légères ayant de 5 à 10 atomes de carbone par molécule.

### Description

La zéolithe de type structural MTT selon l'invention comprend des cristaux de zéolithe MTT, dont au moins une partie se présente sous la forme d'agrégats de zéolithe MTT. La zéolithe de type structural MTT selon l'invention peut être la zéolithe ZSM-23, la zéolithe EU-13, la zéolithe ISI-14 ou la zéolithe KZ-1.
Dans tout ce qui suit, on entend, au sens de la présente invention, par agrégat, un ensemble formé par au moins deux cristaux de zéolithes ayant au moins un point de contact entre eux. La granulométrie des agrégats de cristaux est représentée par la dimension Dv,X, définie comme étant le diamètre de la sphère équivalente telle que X % en volume des agrégats a une taille inférieure audit diamètre.
La zéolithe de type structural MTT selon l'invention est caractérisée en ce que la taille des cristaux de zéolithe MTT est inférieure à 5 µm, bornes comprises, au moins une partie des cristaux de zéolithe étant regroupée sous forme d'agrégats, lesdits agrégats de cristaux étant caractérisés en ce qu'ils présentent une granulométrie telle que la dimension Dv,90 est comprise entre 40 nm et 100 µm.

La zéolithe de type structural MTT selon la présente invention a généralement la formule suivante sous forme anhydre: 0 à 20 R_{2/n}O : 0-10 T₂O₃ : 100 XO₂ , où R représente un cation de valence n, X représente le silicium et/ou le germanium, T représente au moins un élément choisi parmi l'aluminium, le fer, le gallium, le bore, le titane, le vanadium, le zirconium, le molybdène, l'arsenic, l'antimoine, le chrome et le manganèse, le rapport atomique global X/T étant supérieur ou égal à 5 et préférentiellement supérieur à 10.

La taille des cristaux est déterminée par diffraction des rayons X et/ou par microscopie électronique. La taille des agrégats est déterminée par granulométrie à diffraction laser et/ou par microscopie électronique. La mesure de granulométrie par diffraction laser est réalisée sur la zéolithe mise en suspension dans de l'eau. La distribution en taille des agrégats définie en volume est calculée à partir des signaux lumineux collectés par les détecteurs et avec la théorie de Fraunhofer. Les caractéristiques granulométriques de la zéolithe de type structural MTT sont avantageusement atteintes directement lors de la synthèse de la zéolithe. Elles peuvent aussi être obtenues par toute méthode permettant de diminuer la taille des agrégats après la synthèse comme par exemple, le broyage ou encore en adaptant les conditions de mise en forme, par exemple les conditions du malaxage lors de l'extrusion.

De préférence, la taille des cristaux de zéolithe MTT est inférieure à 2 µm. De manière plus préférée, elle est inférieure à 0,5 µm et préférentiellement inférieure à 0,2 µm. Les agrégats de cristaux présentent une granulométrie telle que la dimension Dv,90 est préférentiellement comprise entre 40 nm et 80 µm. En particulier, Dv,90 est généralement comprise entre 40 nm et 60 µm, et de façon encore plus avantageuse Dv,90 est comprise ente 40 nm et à 40 µm

La zéolithe de type structural MTT selon l'invention est obtenue par exemple selon un procédé de préparation comprenant la réaction d'un mélange aqueux avec au moins une source d'au moins un élément X choisi parmi le silicium et le germanium, au moins une source d'au moins un élément T choisi parmi l'aluminium, le fer, le gallium, le bore, le titane, le vanadium, le zirconium, le molybdène, l'arsenic, l'antimoine, le chrome et le manganèse et au moins un composé organique azoté Q jouant le rôle de structurant choisi parmi les dérivés alkylés de polyméthylène α,ω diammonium et les précurseurs desdits dérivés. La réaction du mélange est maintenue jusqu'à cristallisation. Le dérivé alkylé de polyméthylène α,ω diammonium, utilisé plus particulièrement pour la synthèse de la zéolithe ZSM-23, est défini par la formule: R₁R₂R₃-N⁺-(CH₂)ₙ-N⁺-R₄R₅R₆, n étant compris entre 3 et 14 et R₁ à R₆, identiques ou différents, pouvant représenter des radicaux alkyles ou hydroxyalkyles ayant de 1 à 8 atomes de carbone, jusqu'à cinq radicaux R₁ à R_{I} pouvant être de l'hydrogène.

Selon un premier mode de préparation de la zéolithe MTT selon l'invention, le contrôle de la taille des cristaux de zéolithe et des agrégats de cristaux peut se faire pendant la synthèse et dépend de l'ensemble des processus de cristallisation qui sont contrôlés par les paramètres de synthèse. Parmi ces paramètres, on peut citer en particulier la sursaturation (concentration des réactifs), le pH (alcalinité), la force ionique (ajout de sels), l'ajout de germes solides, le profil de température et les caractéristiques de mélange et d'agitation.

S'agissant du contrôle de la taille des cristaux et des agrégats de cristaux par la vitesse d'agitation appliquée dans le réacteur, il est avantageux d'appliquer au mélange au moins deux vitesses d'agitation successives sensiblement différentes l'une de l'autre. De manière préférée, on agite avec une première vitesse d'agitation puis on agite avec une deuxième vitesse d'agitation sensiblement plus élevée que la première vitesse d'agitation. Ainsi, la deuxième vitesse d'agitation est préférentiellement au moins 5 % plus élevée que la première vitesse d'agitation. Elle est de manière plus préférée au moins 20 % plus élevée que la première vitesse d'agitation, et de manière encore plus préférée au moins 50 % plus élevée que la première vitesse d'agitation. La durée d'agitation pendant laquelle on applique la première vitesse d'agitation représente avantageusement 90 % du temps total d'agitation et de manière encore plus avantageuse 95 % du temps total d'agitation. Il va de soi que le type de réacteur utilisé pour réaliser la préparation de la zéolithe selon l'invention conditionne la vitesse d'agitation à appliquer pour obtenir la taille de cristaux et d'agrégats de cristaux désirée. Il convient notamment de prendre en considération la puissance dissipée par l'agitation et le volume du réacteur pour choisir une vitesse d'agitation adéquate

Selon une mise en oeuvre particulière, le procédé de préparation de la zéolithe selon l'invention comprend l'introduction, lors de la synthèse, de germes S d'au moins une zéolithe identique ou différente de la zéolithe MTT. En général, la taille des particules de germes doit être calibrée entre 0,005 et 100 µm, préférentiellement entre 0,01 et 40 µm. Ainsi, on pourra utiliser des germes d'au moins une zéolithe par exemple de type structural LTA, LTL, FAU, MOR, MAZ, OFF, FER, ERI, BEA, MFI, MTW, EUO, LEV, TON et NES, IM-5 ou une zéolithe NU-85, NU-86, NU-88, ou une zéolithe de type structural MTT. De préférence, on utilise comme germes des germes d'au moins une zéolithe de type structural LTA, FAU, MOR, MFI, MTT. Selon une forme préférée de mise en oeuvre, les germes sont différents de la zéolithe MTT préparée selon l'invention par leur type structural ou par la composition chimique de leur charpente cristalline.

Les germes S sont introduits directement après leur synthèse ou après avoir subi au moins l'une des étapes choisies parmi les étapes suivantes après synthèse: lavage, séchage, calcination et échange ionique. Les germes peuvent être introduits à n'importe quel moment de la préparation de la zéolithe MTT Les germes peuvent être introduits par exemple en même temps que les précurseurs des oxydes métalliques à base des éléments X et T, le structurant organique ou ses précurseurs, ou les germes peuvent être d'abord introduits dans le mélange aqueux ou encore les germes peuvent être introduits après l'introduction des précurseurs des oxydes et du structurant organique ou de ses précurseurs. De préférence, les germes sont introduits après homogénéisation au moins en partie du mélange aqueux contenant les précurseurs des oxydes métalliques à base des éléments X et T et le structurant organique ou les précurseurs dudit structurant.

Dans le cas où la préparation du matériau de type structural MTT est la zéolithe ZSM-23, les dérivés alkylés de polyméthylène α,ω diammonium, utilisés comme structurant organique, sont, entre autres, les dérivés alkylés d'heptaméthylène α,ω diammonium, d'octaméthylène α,ω diammonium, d'undécaméthylène α,ω diammonium, de dodécaméthylène α,ω diammonium et spécialement les dérivés méthylés d'heptaméthylène α,ω diammonium, d'octaméthylène α,ω diammonium, d'undécaméthylène α,ω diammonium, de dodécaméthylène α,ω diammonium et encore plus préférentiellement les sels de 1,7 N,N,N,N',N',N'-hexaméthylheptaméthylène α,ω diammonium, de 1,8 N,N,N,N',N',N'-hexaméthyloctaméthylène α,ω diammonium, de 1,11 N,N,N,N',N',N'-hexaméthylundécaméthylène α,ω diammonium, de 1,12 N,N,N,N',N',N'-hexaméthyldodécaméthylène α,ω diammonium par exemple l'halogénure, l'hydroxyde, le sulfate, le silicate, l'aluminate. Des précurseurs appropriés conduisant aux dérivés alkylés de polyméthylène α,ω diammonium préférés peuvent être utilisés et sont notamment les diamines apparentées conjointement avec des alcools, des halogénures d'alkyle, ou des alcanediols ou des halogénures d'alcane apparentés conjointement avec des alkylamines, de manière préférée les trialkylamines. Ils peuvent être utilisés tels quels in situ ou peuvent être préchauffés ensemble dans le récipient de réaction de préférence en solution avant l'addition des autres réactifs nécessaires pour la synthèse de la zéolithe ZSM-23.

Dans une autre mise en oeuvre particulière du procédé de préparation de la zéolithe selon l'invention, indépendante ou non des mises en oeuvre précédentes, il peut être avantageux d'ajouter au milieu réactionnel au moins un sel de métal alcalin ou d'ammonium P. On peut citer par exemple des radicaux acides forts tels que du bromure, du chlorure, de l'iodure, du sulfate, du phosphate ou du nitrate, ou des radicaux acides faibles tels que les radicaux acides organiques, par exemple du citrate ou de l'acétate. Ce sel peut accélérer la cristallisation des zéolithes de type structural MTT, par exemple la zéolithe ZSM-23, à partir du mélange réactionnel et il peut affecter la taille et la forme des cristaux desdites zéolithes.

Conformément au procédé de préparation de la zéolithe MTT selon l'invention, et plus particulièrement de la zéolithe ZSM-23, le mélange réactionnel de synthèse de ladite zéolithe de type structural MTT a avantageusement la composition suivante, exprimée sous forme d'oxydes :

| | |
|---|---|
| XO₂/T₂O₃ | au moins 10 |
| OH⁻/XO₂ | 0,002 à 2,0 |
| Q/XO₂ | 0,002 à 2,0 |
| Q/(M⁺ + Q) | 0,1 à 1,0 |
| H₂O/XO₂ | 1 à 500 |
| P/XO₂ | 0 à 5 |
| S/XO₂ | 0 à 0,1 |

de manière préférée, le mélange réactionnel a la composition suivante, exprimée sous la forme d'oxydes :

| | |
|---|---|
| XO₂/T₂O₃ (mol/mol) | au moins 12 |
| OH⁻/XO₂ (mol/mol) | 0,005 à 1,5 |
| Q/XO₂ (mol/mol) | 0,005 à 1,5 |
| Q/(M⁺ + Q) (mol/mol) | 0,1 à 1,0 |
| H₂O/XO₂ (mol/mol) | 3 à 250 |
| P/XO₂ (mol/mol) | 0 à 1 |
| S/XO₂(g/g) | 0 à 0,07 |

et, de manière encore plus préférée, le mélange réactionnel a la composition suivante, exprimée sous la forme d'oxydes

| | |
|---|---|
| XO₂/T₂O₃ (mol/mol) | au moins 15 |
| OH⁻/XO₂ (mol/mol) | 0,01 à 1 |
| Q/XO₂ (mol/mol) | 0,01 à 1 |
| Q/(M⁺ + Q) (mol/mol) | 0,1 à 1,0 |
| H₂O/XO₂ (mol/mol) | 5 à 100 |
| P/XO₂ (mol/mol) | 0 à 0,25 |
| S/XO₂(g/g) | 0 à 0,04 |

Où :
X est le silicium et/ou le germanium. De préférence, X est le silicium.
T est au moins un élément choisi parmi l'aluminium, le fer, le gallium, le bore, le titane, le vanadium, le zirconium, le molybdène, l'arsenic, l'antimoine, le chrome et le manganèse.
De préférence, T est l'aluminium.
M⁺ représente un métal alcalin ou l'ion ammonium. De préférence, M est le sodium.
Q représente le structurant organique, ou les précurseurs dudit structurant,
S représente les germes de zéolithe exprimés sous la forme séchée, calcinée ou échangée,
P représente le sel de métal alcalin ou d'ammonium.

M⁺ et/ou Q peuvent être présents sous forme d'hydroxydes ou de sels d'acides inorganiques ou organiques à la condition que le critère OH⁻/XO₂ soit satisfait.

Le mélange de réaction est habituellement mis à réagir sous la pression autogène, éventuellement avec apport d'un gaz, par exemple d'azote, à une température située entre 85 et 250°C jusqu'à ce qu'il se forme des cristaux de la zéolithe de type structural MTT, ce qui peut durer de 1 minute à plusieurs mois suivant la nature et la composition des réactifs, le mode de chauffage et de mélange, la température de travail et l'agitation.

Au terme de la réaction, la phase solide est collectée sur un filtre et lavée et est alors prête pour les opérations suivantes comme le séchage, la calcination et l'échange d'ions.

La source de silicium peut être l'une quelconque de celles dont l'utilisation est normalement envisagée pour la synthèse des zéolithes, par exemple la silice solide en poudre, l'acide silicique, la silice colloïdale ou la silice en solution. Parmi les silices en poudre utilisables, il convient de citer les silices précipitées, spécialement celles obtenues par précipitation à partir d'une solution d'un silicate de métal alcalin, comme les ZEOSIL ou TIXOSIL produites par Rhône-Poulenc, les silices pyrogénées telles que les Aerosils produites par Degussa, les Cabosil produites par Cabot et les gels de silice. Des silices colloïdales de diverses granulométries peuvent être utilisées, comme celles vendues sous les marques déposées " LUDOX " de Dupont, et " SYTON " de Monsanto.

Les silices dissoutes utilisables sont notamment les verres solubles ou silicates commercialisés contenant : 0,5 à 6,0 et spécialement 2,0 à 4,0 moles de SiO₂ par mole d'oxyde de métal alcalin et les silicates obtenus par dissolution de silice dans un hydroxyde de métal alcalin, un hydroxyde d'ammonium quaternaire ou un mélange de ceux-ci.

La source d'aluminium est le plus avantageusement l'aluminate de sodium, mais peut aussi être l'aluminium, un sel d'aluminium, par exemple le chlorure, le nitrate ou le sulfate, un alcoolate d'aluminium ou l'alumine elle-même qui de préférence se trouve sous une forme hydratée ou hydratable comme l'alumine colloïdale, la pseudoboehmite, la boehmite, l'alumine gamma, ou le trihydrate alpha ou bêta. On peut utiliser des mélanges des sources citées ci-dessus. Des sources combinées de silicium et d'aluminium peuvent aussi être mises en oeuvre telles que les silice-alumines amorphes ou certaines argiles.

Afin d'obtenir la forme hydrogène de la zéolithe de structure MTT selon l'invention, on peut effectuer un échange d'ions avec un acide, spécialement un acide minéral fort comme l'acide chlorhydrique, sulfurique ou nitrique, ou un composé d'ammonium comme un sel d'ammonium tel que le chlorure, le sulfate ou le nitrate d'ammonium. L'échange d'ions peut être effectué par dilution en une ou plusieurs fois avec la solution d'échange d'ions. La zéolithe peut être calcinée avant ou après l'échange d'ions, ou entre deux étapes d'échange d'ions, de préférence avant l'échange d'ions afin d'éliminer toute substance organique incluse, dans la mesure où l'échange d'ions s'en trouve facilité

En règle générale, le (ou les) cation(s) de la zéolithe de type structural MTT peu(ven)t être remplacé(s) par un ou des cations quelconques de métaux et en particulier ceux des groupes lA, IB, IIA, IIB, IIIA, IIIB (y compris les terres rares), VIII (y compris les métaux nobles) de même que par le plomb, l'étain et le bismuth (Le tableau périodique est tel que dans "Handbook of Physic and Chemistry", 76ème édition). L'échange est exécuté au moyen de sels hydrosolubles quelconques contenant le cation approprié.

Dans un autre mode de préparation de la zéolithe selon l'invention, indépendant ou non des modes de préparation précédents, la zéolithe selon l'invention est obtenue par broyage réalisé après la synthèse. Ce broyage est effectué sur une zéolithe MTT brute de synthèse présentant un Dv,90 des agrégats supérieur à 100 µm. Toute technique de broyage connue de l'homme du métier convient. Ce broyage peut être effectué sur la zéolithe brute de synthèse, avant calcination, après calcination ou après échange cationique, en voie sèche ou humide, en veillant à ce qu'il n'affecte pas la cristallinité de la zéolithe.

Dans un autre mode de préparation de la zéolithe selon l'invention, indépendant ou non des modes de préparation précédents, le contrôle de la taille des agrégats de cristaux de la zéolithe MTT peut encore être obtenu par l'adaptation des conditions de mise en forme, par exemple des conditions de malaxage lors de l'extrusion.

La présente invention concerne également l'utilisation de la zéolithe telle que décrite précédemment comme adsorbant pour le contrôle de la pollution, comme tamis moléculaire pour la séparation et comme solide acide pour la catalyse dans les domaines du raffinage et de la pétrochimie.
Par exemple, lorsqu'elle est utilisée comme composant acide d'un catalyseur, la zéolithe de structure MTT peut être associée à une matrice inorganique qui peut être inerte ou catalytiquement active et à une phase métallique. La matrice inorganique peut être présente simplement comme liant pour maintenir ensemble les petites particules de la zéolithe sous les différentes formes connues des catalyseurs (extrudés, billes, poudres, pastilles), ou bien peut être ajoutée comme diluant pour imposer le degré de conversion dans un procédé qui progresserait sinon à une allure trop rapide conduisant à un encrassement du catalyseur en conséquence d'une formation exagérée de coke. Des matrices inorganiques typiques sont notamment des matières de support pour les catalyseurs comme la silice, les différentes formes d'alumine, et les argiles kaoliniques, les bentonites, les montmorillonites, la sépiolite, l'attapulgite, la terre à foulon, les matières poreuses synthétiques comme SiO₂-Al₂O_{3,} SiO₂-ZrO_{2,} SiO₂-ThO_{2,} SiO₂-BeO, SiO₂-TiO₂ ou toute combinaison de ces composés. Ladite matrice inorganique peut être un mélange de différents composés, en particulier d'une phase inerte et d'une phase catalytiquement active.

Ladite phase métallique, à laquelle la zéolithe peut être associée, est introduite sur la zéolithe seule, la matrice inorganique seule ou l'ensemble matrice inorganique-zéolithe par échange d'ions ou imprégnation avec des cations ou oxydes choisis parmi les métaux suivants, Cu, Ag, , Ga, Mg, Ca, Sr, Zn, Cd, B, Al, Sn, Pb, V, P, Sb, Cr, Mo, W, Mn, Re, Fe, Co, Ni, Pt, Pd, Ru, Rh, Os, Ir et tout autre élément de la classification périodique des éléments.

La zéolithe de type structural MTT selon l'invention peut aussi être associée à au moins une autre zéolithe et jouer le rôle de phase active principale ou d'additif.

Dans un autre mode de préparation de la zéolithe selon l'invention, indépendant ou non des modes de réalisation précédents, le contrôle de la taille des agrégats de cristaux peut encore être obtenu par l'adaptation des conditions de dispersion des différents ingrédients formant le support de catalyseur préalable à la mise en forme.

Les compositions catalytiques comportant la zéolithe de type structural MTT selon l'invention peuvent trouver leur application dans les réactions d'isomérisation, de transalkylation et de dismutation, d'alkylation et de désalkylation, d'hydratation et de déshydratation, d'oligomérisation et de polymérisation, de cyclisation, d'aromatisation, de craquage et d'hydrocraquage, de reformage, d'hydrogénation et de déshydrogénation, d'oxydation, d'halogénation, de synthèses d'amines, d'hydrodésulfuration et d'hydrodénitrification, d'élimination catalytique des oxydes d'azote, la formation d'éther et la conversion d'hydrocarbures et la synthèse de composés organiques en général, lesdites réactions comprenant des hydrocarbures aliphatiques saturés et insaturés, des hydrocarbures aromatiques, des composés organiques oxygénés et des composés organiques contenant de l'azote et/ou du soufre, ainsi que des composés organiques contenant d'autres groupes fonctionnels.

L'invention concerne tout particulièrement l'utilisation de la zéolithe de type structural MTT selon la présente invention comme composant acide d'un catalyseur zéolithique bifonctionnel pour l'isomérisation des paraffines linéaires ayant de 5 à 10 atomes de carbone.

Le catalyseur selon l'invention peut-être utilisé dans tout procédé d'isomérisation (ou d'hydro-isomérisation) de paraffines C₅-C₁₀ de préférence C₇-C₁₀, de manière très préférée C₇-C₉ et de manière encore plus préférée C₇-C₈. Le catalyseur selon l'invention est particulièrement adapté pour être utilisé dans un procédé de préparation d'essences à haut indice d'octane, associant une isomérisation catalytique et une séparation. Il est plus particulièrement bien adapté au procédé décrit dans le brevet FR B-2 771 419, qui comprend une section isomérisation et au moins une section permettant la séparation des paraffines dibranchées et tribranchées.

Ledit catalyseur, mis en forme, contient :
- au moins une zéolithe de structure MTT, par exemple la zéolithe ZSM-23, caractérisée par des granulométries de ses cristaux et de ses agrégats de cristaux telles que les cristaux de zéolithe MTT ont une taille inférieure à 5 µm, de préférence inférieure à 2 µm, de manière plus préférée inférieur à 0,5 µm et de manière encore plus préférée inférieure à 0,2 µm, et telles que les agrégats de cristaux présentent un Dv,90 compris entre 40 nm et 100 µm, de préférence compris entre 40 nm et 80 µm, de manière plus préférée entre 40 nm et 60 µm, et de manière encore plus préférée entre 40 nm et 40 µm.
- au moins une fonction hydro-déshydrogénante
- au moins une matrice.

De manière plus précise, le catalyseur à base de zéolithe MTT selon l'invention contient au moins une matrice à une teneur comprise entre 1 et 90 %, de préférence entre 5 et 90 % et de manière encore plus préférée entre 10 et 85 % Les matrices utilisées pour réaliser la mise en forme du catalyseur sont généralement choisies parmi les gels d'alumine, les alumines, la magnésie, les silices-alumines amorphes et leurs mélanges. Des techniques telles que l'extrusion, le pastillage ou la dragéification peuvent être utilisées pour réaliser l'opération de mise en forme.

La fonction hydro-déshydrogénante est par exemple assurée par au moins un élément du groupe VIII de la classification périodique des éléments et de préférence par au moins un métal noble compris dans l'ensemble formé par le platine et le palladium. La teneur pondérale en métal noble, par rapport au catalyseur final, est préférentiellement inférieure à 5 %, plus préférentiellement inférieure à 3 % et encore plus préférentiellement inférieure à 1,5 %. Il est également possible d'utiliser au moins un métal non noble du groupe VIII. La teneur pondérale dudit métal non noble du groupe VIII, par rapport au catalyseur final, est avantageusement comprise entre 1 et 40 % et de manière plus avantageuse entre 10 et 30 % Il est avantageux que le métal non noble soit associé à un métal du groupe VIB (Mo et W préférés).

L'isomérisation (l'hydro-isomérisation) est effectuée dans au moins un réacteur. La température est comprise entre 150 et 350°C, de préférence entre 200 et 300°C, et la pression partielle d'hydrogène est comprise entre 0,1 et 7 MPa, de préférence entre 0,5 et 5 MPa. La vitesse spatiale est comprise entre 0,2 et 10 litres d'hydrocarbures liquides par litre de catalyseur et par heure, de préférence entre 0,5 et 5 litres d'hydrocarbures liquides par litre de catalyseur et par heure. Le rapport molaire hydrogène/charge à l'entrée du réacteur est tel que le rapport molaire hydrogène/charge dans l'effluent sortant du réacteur est généralement supérieur à 0,01, de préférence compris entre 0,01 et 50, de manière plus préférée compns entre 0,06 et 20.

Les exemples qui suivent illustrent de manière plus précise l'invention sans pour autant être limitatifs

### Exemple 1 (comparatif) : Zéolithe ZSM-23 de type structural MTT avec des tailles d'agrégats de cristallites non conformes à l'invention.

Le mélange de synthèse a la composition suivante :

| | |
|---|---|
| SiO₂ (mol) | 60 |
| Al₂O₃ (mol) | 1,5 |
| Na₂O (mol) | 9 |
| OctaBr₂⁽¹⁾ (mol) | 10 |
| H₂O (mol) | 3000 |

| | |
|---|---|
| (1) bromure d'octaméthonium = Me₃ N (CH₂)₈ N Me₃²⁺(Br⁻)₂ | |

On prépare la solution A composée de silicium et de structurant en diluant le bromure d'octaméthonium (Fluka, 97 %) dans 80 % de l'eau nécessaire à la formation du gel puis en ajoutant le sol de silice colloïdale (Ludox HS40, Dupont, 40 % SiO₂). On dissout ensuite l'hydroxyde de sodium solide (Prolabo, 99 %) et l'aluminate de sodium solide (Prolabo, 46 % Al₂O₃, 33 % Na₂O) dans 10 % de l'eau nécessaire à la formation du gel pour former la solution B. On ajoute la solution B dans la solution A sous agitation puis le restant d'eau (10 %). On mélange jusqu'à homogénéisation. On fait réagir le mélange résultant dans un autoclave de 125 ml sous agitation, à 180°C, sous la pression autogène, jusqu'à cristallisation de la zéolithe. Après refroidissement, on filtre le produit et on le lave avec 0,5 litre d'eau déminéralisée puis on le sèche en étuve ventilée à 120°C.

Les résultats de diffraction des rayons X, de granulométrie et d'analyse chimique sont reportés dans le tableau suivant :

| | |
|---|---|
| Durée (j) | 12,0 |
| ZSM-23⁽¹⁾ (%) | 100 |
| Si/Al⁽²⁾ (mol/mol) | 18,9 |
| Production⁽⁵⁾ (%) | 4,7 |
| taille⁽³⁾ des cristaux (nm) | 20-100 |
| Dᵥ₉₀⁽⁴⁾ (µm) | 160 |

| | |
|---|---|
| (1) déterminé par Diffraction des rayons X | |
| (2) déterminé par fluorescence X | |
| (3) déterminée par la relation de Scherrer à partir de la largeur des pics entre 2 θ = 7 à 35° | |
| (4) déterminée par granulométrie à diffraction laser | |
| (5) La production (%) correspond à la masse de solide séché, récupéré en fin de synthèse, par rapport à la masse totale engagée dans le gel initialement. | |

La synthèse conduit à une zéolithe ZSM-23 de rapport Si/Al de 18,9, avec une cristallinité et une production optimales (respectivement 100 % et 4,7 %). La zéolithe se présente sous forme de cristallites de 20 à 100 nm associées en agrégats tels que Dv,90 est de 160 µm.

### Exemple 2 (invention) : Zéolithe ZSM-23 de type structural MTT avec des tailles d'agrégats de cristallites conformes à l'invention obtenues par broyage.

La zéolithe de l'exemple 1 est broyée.

Les résultats de diffraction des rayons X et de granulométrie sont reportés dans le tableau suivant :

| | |
|---|---|
| ZSM-23⁽¹⁾ (%) | 101 |
| Taille⁽²⁾ des cristaux (nm) | 20-100 |
| Dᵥ₉₀⁽³⁾ (µm) | 22 |

| | |
|---|---|
| (1) déterminé par Diffraction des rayons X, avec pour référence l'exemple 1 | |
| (2) déterminée par la relation de Scherrer à partir de la largeur des pics entre 2 θ = 7 à 35° | |
| (3) déterminée par granulométrie à diffraction laser | |

La cristallinité et la taille des cristallites de la zéolithe n'ont pas été modifiées par le broyage (respectivement 100 % et taille comprise entre 20-100 nm).

La taille des agrégats est sensiblement diminuée par le broyage, lequel génère des agrégats de cristaux présentant un Dv,90 égal à 22 µm.

### Exemples 3 à 6 (invention) : Zéolithes ZSM-23 de type structural MTT avec des tailles d'agrégats de cristaux conformes à l'invention obtenues directement par synthèse.

Le mélange de synthèse a la composition suivante :

| | | | | |
|---|---|---|---|---|
| Exemple | 3 | 4 | 5 | 6 |
| SiO₂ (mol) | 60 | 60 | 60 | 60 |
| Al₂O₃ (mol) | 1,5 | 1,5 | 1,5 | 1,5 |
| Na₂O (mol) | 9 | 9 | 9 | 9 |
| OctaBr₂⁽¹⁾ (mol) | 10 | 10 | 0 | 0 |
| DBO⁽²⁾ (mol) | 0 | 0 | 10 | 10 |
| TMA⁽³⁾ (mol) | 0 | 0 | 20 | 20 |
| H₂O (mol) | 3000 | 3000 | 3000 | 3000 |
| ZSM-23⁽⁴⁾ (%) | 0 | 4 | 0 | 4 |

| | | | | |
|---|---|---|---|---|
| (1) bromure d'octaméthonium = Me₃ N (CH₂)₈ N Me₃²⁺ (Br⁻)₂ | | | | |
| (2) dibromooctane | | | | |
| (3) triméthylamine | | | | |
| (4) par rapport à la silice | | | | |

On prépare la solution A composée de silicium et de structurant en diluant le bromure d'octaméthonium (Fluka, 97 %) ou ses précurseurs, le dibromooctane (Acros, 99 %) et une solution aqueuse de triméthylamine (Acros, 45 %), dans 80 % de l'eau nécessaire à la formation du gel puis en ajoutant le sol de silice colloïdale (Ludox HS40, Dupont, 40 % SiO₂). On dissout ensuite l'hydroxyde de sodium solide (Prolabo, 99 %) et l'aluminate de sodium solide (Prolabo, 46 % Al₂O₃, 33 % Na₂O) dans 10 % de l'eau nécessaire à la formation du gel pour former la solution B. On ajoute la solution B dans la solution A sous agitation puis le restant d'eau (10 %). On mélange jusqu'à homogénéisation et on ajoute éventuellement des germes de zéolithe ZSM-23 (exemples 4 et 6). On fait réagir le mélange résultant dans un autoclave de 1 I sous agitation de 300 tr/min, à 180°C, sous la pression autogène, jusqu'à cristallisation de la zéolithe. L'agitation de l'opération est augmentée à 400 tr/min (soit une augmentation de la vitesse d'agitation de l'ordre de 34% par rapport à la vitesse initiale) pendant 10 h, pour ajuster la granulométrie des agrégats. Après refroidissement, on filtre le produit et on le lave avec 3,5 litres d'eau déminéralisée puis on le sèche en étuve ventilée à 120°C.

Les résultats de diffraction des rayons X, de granulométrie et d'analyse chimique sont reportés dans le tableau suivant

| Exemple | 3 (invention) | 4 (invention) | 5 (invention) | 6 (invention) |
|---|---|---|---|---|
| Structurant | OctaBr₂ | OctaBr₂ | DBO+TMA | DBO+TMA |
| Germes (%) | 0 | 4 | 0 | 4 |
| Durée (j) | 12,0 | 9,8 | 11,3 | 9,2 |
| ZSM-23⁽¹⁾ (%) | 99 | 101 | 100 | 101 |
| Si/Al⁽²⁾ (mol/mol) | 18,9 | 18,7 | 18,6 | 18,8 |
| Production⁽⁵⁾ %) | 4,7 | 4,8 | 4,9 | 4,6 |
| Taille⁽³⁾ (nm) | 20-100 | 20-100 | 20-100 | 20-100 |
| Dᵥ₉₀⁽⁴⁾ (µm) | 37 | 35 | 39 | 36 |

| | | | | |
|---|---|---|---|---|
| (1) déterminé par Diffraction des rayons X, avec pour référence l'exemple 1 | | | | |
| (2) déterminé par fluorescence X | | | | |
| (3) déterminée par la relation de Scherrer à partir de la largeur des pics entre 2 θ = 7 à 35° | | | | |
| (4) déterminée par granulométrie à diffraction laser | | | | |
| (5) La production (%) correspond à la masse de solide séché, récupéré en fin de synthèse, par rapport à la masse totale engagée dans le gel initialement. | | | | |

Les zéolithes sont obtenues avec une cristallinité et une production optimales (supérieure respectivement à 99 % et à 4,6 %), un rapport Si/Al compris entre 18,6 et 18,9. Chaque zéolithe se présente sous forme de cristallites de 20 à 100 nm associées en agrégats de cristaux tels que Dv,90 est inférieure à 40 µm.

### Exemple 7 : Préparations des zéolithes ZSM-23 de type structural MTT sous forme hydrogène

Les zéolithes ZSM-23 préparées selon les exemples 1, 2 et 3 sont soumises à une suite de traitements ayant pour but d'obtenir la forme hydrogène, encore appelée forme acide. Cet enchaînement de traitement, identique pour les trois zéolithes issues des exemples 1, 2 et 3 est le suivant: chaque zéolithe issue de la synthèse est soumise à une calcination sous air sec durant 12 h à 550°C, puis à trois échanges ioniques successifs par une solution de nitrate d'ammonium, de manière à obtenir la forme NH₄⁺ de la zéolithe. Pour cela, 10 grammes de chaque zéolithe ZSM-23 calcinée préalablement sont mis en suspension dans 100 ml d'une solution molaire de nitrate d'ammonium (5M) puis agitée sous reflux durant 2 heures. Le solide est ensuite filtré, lavé. Ce cycle de traitement est reproduit encore deux fois supplémentaires. Le solide obtenu est ensuite séché à 60°C durant 10 heures puis est calciné à 500°C pendant 4 heures sous débit d'air sec de manière à obtenir la forme hydrogène.
Les caractéristiques mesurées des zéolithes après ces traitements sont les suivantes :

| ZSM-23 utilisée | ZSM-23/1 ZSM-23 de l'exemple 1 | ZSM-23/2 ZSM-23 de l'exemple 2 | ZSM-23/3 ZSM-23 de l'exemple 3 |
|---|---|---|---|
| | Non conforme | conforme | Conforme |
| Teneur en Na (ppm poids) | 18 | 15 | 23 |
| Si/Al global∗ | 19,1 | 19,1 | 19,2 |

| | | | |
|---|---|---|---|
| ∗déterminé par fluorescence X. | | | |

### Exemple 8 : Préparation des catalyseurs C1, C2 et C3

Les zéolithes préparées dans l'exemple 7 sont malaxées avec un gel d'alumine. La pâte malaxée est ensuite extrudée à travers une filière de diamètre 1,4 mm. La teneur en zéolithe ZSM-23 de type structural MTT dans le support (zéolithe + matrice) est de 80% poids

Un dépôt par imprégnation à sec d'une solution aqueuse du sel de platine Pt(NH₃)₄Cl₂ est réalisée de telle manière à obtenir une teneur en platine sur le support d'environ 0,5 % poids. Les catalyseurs ainsi obtenus sont dénommés C1 dans le cas de la mise en forme de la zéolithe ZSM-23/1, C2 dans le cas. de la zéolithe ZSM-23/2 et C3 dans le cas de la zéolithe ZSM-23/3 La dispersion du platine est mesurée par titrage H₂/O₂ après calcination à 450°C, sous air sec, et réduction sous hydrogène à 420°C.

| Catalyseur ZSM-23 utilisée | C1 ZSM-23/1 | C2 ZSM-23/2 | C3 ZSM-23/3 |
|---|---|---|---|
| | Non conforme | Conforme | Conforme |
| Teneur en Pt (% poids) | 0,48 | 0,49 | 0,46 |
| Dispersion du Pt (%) | 42 | 45 | 40 |

### Exemple 9 : Evaluation catalytique des catalyseurs C1, C2 et C3 en hydroisomérisation du n-heptane

Préalablement à leur évaluation catalytique, les catalyseurs C1, C2 et C3 sont soumis à une calcination à 450°C sous air sec durant 4 heures. La montée en température est réalisée à une vitesse de 5°C/minute et deux paliers d'une heure chacun sont respectés à 150°C et 300°C.
La réduction de la phase métallique est réalisée in situ dans le réacteur catalytique juste avant la réalisation du test.
Les conditions de réduction pour les trois catalyseurs, sont les suivantes :
- montée en température à 7°C/minute jusqu'à 150°C sous flux d'hydrogène, palier de 30 minutes,
- puis de nouveau montée en température à 7°C/minute jusqu'à 300°C sous flux d'hydrogène, palier de 30 minutes,
- puis finalement montée en température à 7°C/minute jusqu'à 450°C sous flux d'hydrogène, palier de 60 minutes.
La température est ensuite diminuée jusqu'à la valeur de la température de réaction qui est de 235°C. Les tests catalytiques sont réalisés dans un réacteur à lit fixe en phase gazeuse. La molécule isomérisée (hydro-isomérisée) en présence d'hydrogène est le n-heptane (de pureté 99,9%), et le rapport molaire hydrogène sur n-heptane, utilisée dans les divers tests catalytiques, est de 3 La vitesse spatiale, c'est à dire la masse de n-heptane injecté par gramme de catalyseur et par heure est de 2,1 h-1.
Les produits formés sont soit des produits de craquage C₁ à C₆, soit des produits à 7 atomes de carbone par molécule, isomères du n-heptane, ou bien encore des produits aromatiques provenant des réactions d'aromatisation du n-heptane. Les résultats catalytiques obtenus sont regroupés dans le tableau ci-après :

| | | | |
|---|---|---|---|
| % poids/Catalyseurs | C1 | C2 | C3 |
| Conversion n-C₇ | 67 | 75 | 82 |
| Rendement en produits de C₁-C₆ - Craquage | 19 | 15 | 11 |
| Rendement Isomérisation | 48 | 60 | 71 |

Ce tableau met en évidence que l'utilisation d'un catalyseur comprenant une zéolithe ZSM-23 selon l'invention (catalyseurs C2 et C3) permet de réaliser l'hydroisomérisation du n-heptane de façon plus sélective en produits d'isomérisation et en ayant une meilleure activité. En effet, les conversions obtenues, à conditions opératoires identiques, sont plus élevées.

## Revendications

1. Zéolithe de type structural MTT comprenant des cristaux de zéolithe MTT de taille inférieure à 5 µm, au moins une partie des cristaux de zéolithe MTT étant sous la forme d'agrégats de zéolithe MTT, lesdits agrégats présentant une granulométrie telle que la valeur de Dv,90 est comprise entre 40 nm et 100 µm.

2. Zéolithe selon la revendication 1, **caractérisée en ce que** la valeur de Dv,90 des agrégats est comprise entre 40 nm et 80 µm.

3. Zéolithe selon l'une des revendications 1 à 2, **caractérisée en ce que** la valeur de Dv,90 des agrégats est comprise entre 40 nm et 60 µm.

4. Zéolithe selon l'une des revendications 1 à 3, **caractérisée en ce que** la valeur de Dv,90 des agrégats est comprise entre 40 nm et 40 µm.

5. Zéolithe selon l'une des revendications 1 à 4, **caractérisée en ce que** les cristaux de zéolithe ont une taille inférieure à 0,5 µm.

6. Zéolithe selon l'une des revendications 1 à 5, **caractérisée en ce que** les cristaux de zéolithe ont une taille inférieure à 0,2 µm.

7. Zéolithe selon l'une des revendications 1 à 6, **caractérisée en ce qu'**elle comprend au moins un élément X choisi parmi le silicium et le germanium et au moins un élément T choisi dans le groupe formé par l'aluminium, le fer, le gallium, le bore, le titane, le vanadium, le zirconium, le molybdène, l'arsenic, l'antimoine, le chrome et le manganèse, le rapport atomique global X/T étant supérieur ou égal à 5.

8. Zéolithe selon la revendication 7, **caractérisée en ce que** l'élément X est le silicium et l'élément T est l'aluminium.

9. Zéolithe selon l'une des revendications 1 à 8, **caractérisée en ce que** la zéolithe est la zéolithe ZSM-23.

10. Procédé de préparation d'une zéolithe selon l'une des revendications 1 à 9, **caractérisé en ce qu'**il comprend la réaction d'un mélange aqueux avec au moins une source d'au moins un élément X, au moins une source d'au moins un élément T, au moins un composé organique azoté Q choisi parmi les dérivés alkylés de polymethylène α-ω diammonium et des précurseurs desdits dérivés.

11. Procédé selon la revendication 10, **caractérisé en ce que** le mélange réactionnel est agité par l'application d'au moins deux vitesses d'agitation successives sensiblement différentes.

12. Procédé selon la revendication 11, **caractérisé en ce que** la deuxième vitesse d'agitation est sensiblement supérieure à la première vitesse d'agitation.

13. Procédé selon l'une des revendications 10 à 12, **caractérisé en ce qu'**il comprend l'introduction de germes S d'au moins une zéolithe au mélange réactionnel.

14. Procédé selon la revendication 13, **caractérisé en ce que** les germes de zéolithe sont introduits après l'homogénéisation au moins en partie du mélange aqueux contenant la source d'élément X, la source d'élément T, la source de structurant organique.

15. Procédé selon l'une des revendications 10 à 14, **caractérisé en ce que** le composé organique azoté Q est choisi parmi les dérivés alkylés de polymethylène α-ω diammonium défini par la formule : R₁R₂R₃ N⁺ (CH₂)ₙ N⁺ R₄R₅R₆, n étant compris entre 3 et 14 et R₁ à R₆, identiques ou différents, pouvant représenter des radicaux alkyles ou hydroxyalkyles ayant de 1 à 8 atomes de carbone, jusqu'à cinq radicaux R₁ à R_{I} pouvant être de l'hydrogène.

16. Procédé selon l'une des revendications 10 à 15, **caractérisé en ce qu'**il comprend l'introduction d'au moins un sel P de métal alcalin ou d'ammonium.

17. Procédé selon l'une des revendications 10 à 16, **caractérisé en ce que** le mélange aqueux a la composition suivante :
| | |
|---|---|
| XO₂/T₂O₃ | au moins 10 |
| OH⁻/XO₂ | 0,002 à 2,0 |
| Q/XO₂ | 0,002 à 2,0 |
| Q/(M⁺ + Q) | 0,1 à 1,0 |
| H₂O/XO₂ | 1 à 500 |
| P/XO₂ | 0 à 5 |
| S/XO₂ | 0 à 0,1 |

18. Procédé de préparation d'une zéolithe selon l'une des revendications 1 à 9, **caractérisé en ce que** l'on broie une zéolithe brute de synthèse ayant une valeur de Dv,90 des agrégats supérieure à 100 µm.

19. Utilisation de la zéolithe de type structural MTT selon l'une des revendications 1 à 9 comme adsorbant pour le contrôle de la pollution et comme tamis moléculaire pour la séparation.

20. Catalyseur comprenant une zéolithe MTT selon l'une des revendications 1 à 9 ou préparée selon l'une des revendications 10 à 18.

21. Catalyseur selon la revendication 20, **caractérisé en ce qu'**il comprend au moins un liant et au moins un métal du groupe VIII de la classification périodique des éléments.

22. Catalyseur selon l'une des revendications 20 à 21, **caractérisé en ce que** la zéolithe est au moins en partie sous forme acide.

23. Procédé d'isomérisation des paraffines linéaires ayant de 5 à 10 atomes de carbone par molécule réalisé en présence d'un catalyseur selon l'une des revendications 20 à 22, ledit procédé étant **caractérisé en ce qu'**il est mis en oeuvre à une température comprise entre 150°C et 350°C bornes incluses, à une pression partielle d'hydrogène comprise entre 0,1 et 7 MPa bornes incluses, avec une vitesse spatiale comprise entre 0,2 et 10 litres d'hydrocarbures liquides par litre de catalyseur et par heure, avec un rapport molaire hydrogène/charge à l'entrée du réacteur tel que le rapport molaire hydrogène/charge dans l'effluent sortant du réacteur est généralement supérieur à 0,01.

## Claims

1. A zeolite with structure type MTT comprising MTT zeolite crystals with a size of less than 5 µm, at least a portion of the MTT zeolite crystals being in the form of MTT zeolite aggregates, said aggregates having a granulometry such that the dimension Dv,90 is in the range 40 nm to 100 µm.

2. A zeolite according to claim 1, **characterized in that** the Dv,90 for the aggregates is in the range 40 nm to 80 µm.

3. A zeolite according to claim 1 or claim 2, **characterized in that** the Dv,90 for the aggregates is in the range 40 nm to 60 µm.

4. A zeolite according to any one of claims 1 to 3, **characterized in that** the Dv,90 of the aggregates is in the range 40 nm to 40 µm.

5. A zeolite according to any one of claims 1 to 4, **characterized in that** the size of the zeolite crystals is less than 0.5 µm.

6. A zeolite according to any one of claims 1 to 5, **characterized in that** the size of the zeolite crystals is less than 0.2 µm.

7. A zeolite according to any one of claims 1 to 6, **characterized in that** it comprises at least an element X selected from silica and germanium and at least one element T selected from aluminium, iron, gallium, boron, titanium, vanadium, zirconium, molybdenum, arsenic, antimony, chromium and manganese, the overall atomic ratio X/T being 5 or more.

8. A zeolite according to claim 7, **characterized in that** the element X is silicon and element T is aluminium.

9. A zeolite according to any one of claims 1 to 8, **characterized in that** the zeolite is ZSM-23 zeolite.

10. A process for preparing a zeolite according to any one of claims 1 to 9, **characterized in that** it comprises reacting an aqueous mixture with at least one source of at least one element X, at least one source of at least one element T, and at least one source of an organic nitrogen-containing compound Q selected from alkylated polymethylene α-ω diammonium derivatives and precursors of said derivatives.

11. A process according to claim 10, **characterized in that** the reaction mixture is stirred by applying at least two substantially different successive stirring rates.

12. A process according to claim 11, **characterized in that** the second stirring rate is substantially higher than the first stirring rate.

13. A process according to any one of claims 10 to 12, **characterized in that** it comprises introducing seeds S of at least one zeolite into the reaction mixture.

14. A process according to claim 13, **characterized in that** the zeolite seeds are introduced after at least partial homogenisation of the aqueous mixture containing the source of element X, the source of element T and the source of the organic template.

15. A process according to any one of claims 10 to 14, **characterized in that** the organic nitrogen-containing compound Q is selected from alkylated polymethylene α-ω diammonium derivatives defined by the formula: R₁R₂R₃N⁺(CH₂)ₙN⁺ R₄R₅R₆, n being in the range 3 to 14 and R₁ to R₆, which may be identical or different, representing alkyl or hydroxyalkyl radicals containing 1 to 8 carbon atoms; up to five R₁ to Rᵢ radicals can be hydrogen.

16. A process according to any one of claims 10 to 15, **characterized in that** it comprises introducing at least one alkali metal and/or ammonium salt P.

17. A process according to any one of claims 1 0 to 16, **characterized in that** the aqueous mixture has the following composition:
| | |
|---|---|
| XO₂/T₂O₃ (mol/mol) | at least 10 |
| OH⁻/XO₂ (mol/mol) | 0.002 to 2.0 |
| Q/XO₂ (mol/mol) | 0.002 to 2.0 |
| Q/(M⁺ + Q) (mol/mol) | 0.1 to 1.0 |
| H₂O/XO₂ (mol/mol) | 1 to 500 |
| P/XO₂ (mol/mol) | 0 to 5 |
| S/XO₂ (g/g) | 0 to 0.1 |

18. A process for preparing a zeolite according to any one of claims 1 to 9, **characterized in that** an as synthesised zeolite with a Dv,90 for the aggregates of more than 100 µm is ground.

19. Use of a zeolite with structure type MTT according to any one of claims 1 to 9, as an adsorbent for controlling pollution and as a molecular sieve for separation.

20. A catalyst comprising an MTT zeolite according to any one of claims 1 to 9 or prepared in accordance with any one of claims 10 to 18.

21. A catalyst according to claim 20, **characterized in that** it comprises at least one binder and at least one metal from group VIII of the periodic table.

22. A catalyst according to. claim 20 or claim 21, **characterized in that** the zeolite is at least partially in its acid form.

23. A process for isomerising straight chain paraffins containing 5 to 10 carbon atoms per molecule carried out in the presence of a catalyst according to any one of claims 20 to 22, said process being **characterized in that** it is carried out at a temperature in the range 150°C to 350°C, limits included, at a partial pressure of hydrogen in the range 0.1 to 7 MPa, limits included, with a space velocity in the range 0.2 to 10 litres of liquid hydrocarbon per litre of catalyst per hour, with a hydrogen/feed mole ratio at the inlet to the reactor such that the hydrogen/feed mole ratio in the effluent leaving the reactor is generally more than 0.01.

## Patentansprüche

1. Zeolith des Strukturtyps MTT enthaltend Kristalle mit einer Größe von weniger als 5 mm, wenigstens ein Teil der Kristalle des Zeolithen befindet sich in der Form eines Aggregats des Zeolithen MTT, genannte Aggregate präsentieren eine Korngrößenverteilung in der Art daß der Wert Dv,90 zwischen 40 nm und 100 µm beträgt.

2. Zeolith gemäß Anspruch 1,**dadurch gekennzeichnet, daß** der Wert Dv,90 der Aggregate zwischen 40 nm und 80 µm beträgt.

3. Zeolith gemäß Anspruch 1 oder 2, **dadurch gekennzeichnet , daß** der Wert Dv,90 der Aggregate zwischen 40 nm und 60 µm beträgt.

4. Zeolith gemäß einem der Ansprüche 1 bis 3, **dadurch gekennzeichnet, daß** der Wert Dv,90 der Aggregate zwischen 40 nm und 40 µm beträgt.

5. Zeolith gemäß einem der Ansprüche 1 bis 4, **dadurch gekennzeichnet, daß** die Kristalle des Zeolithen eine Größe von weniger als 0.5 µm aufweisen.

6. Zeolith gemäß einem der Ansprüche 1 bis 5, **dadurch gekennzeichnet, daß** die Kristalle des Zeolithen eine Größe von weniger als 0.2 µm aufweisen.

7. Zeolith gemäß einem der Ansprüche 1 bis 6, **dadurch gekennzeichnet, daß** er wenigstens ein Element X enthält, ausgewählt aus der aus Silizium und Germanium gebildeten Gruppe und wenigstens ein Element T enthält, ausgewählt aus der durch Aluminium, Eisen, Gallium, Bor, Titan, Vanadium, Zirkonium, Molybdän, Arsen, Antimon, Chrom und Mangan gebildeten Gruppe, und daß das generelle Atomverhältnis X/T größer oder gleich 5 ist.

8. Zeolith gemäß Anspruch 7, **dadurch gekennzeichnet,daß** das Element X Silicium und das Element T Aluminium ist.

9. Zeolith gemäß einem der Ansprüche 1 bis 8, **dadurch gekennzeichnet, daß** der Zeolith der Zeolith ZSM-23 ist.

10. Verfahren zur-Herstellung eines Zeolithen gemäß einem der Ansprüche 1 bis 9, **dadurch gekennzeichnet, daß** es die Reaktion von einer wässrigen Mischung umfaßt, mit wenigstens einer Quelle von wenigstens einem Element X, wenigstens einer Quelle von wenigstens einem Element T, wenigstens einer organischen Stickstoffverbindung Q, ausgewählt aus den alkylierten Derivaten des Polymethylen α-ω diammoniums und den Vorläufern besagten Derivats.

11. Verfahren gemäß Anspruch 10, **dadurch gekennzeichnet, daß** die Reaktionsmischung mittels der Anwendung wenigstens zweier aufeinanderfolgender, merklich unterschiedlicher Durchmischungsgeschwindigkeiten durchmischt wird.

12. Verfahren gemäß Anspruch 11, **dadurch gekennzeichnet, daß** die zweite Durchmischungsgeschwindigkeit merklich höher als die erste Durchmischungsgeschwindigkeit ist.

13. Verfahren gemäß einem der Ansprüche 10 bis 12, **dadurch gekennzeichnet, daß** es die Einführung von S Keimen von wenigstens einem Zeolithen in die Reaktionsmischung umfaßt.

14. Verfahren gemäß Anspruch 13, **dadurch gekennzeichnet, daß** die Zeolith-Keime nach der Homogenisierung wenigstens in den Teil der wässrigen Mischung eingeführt werden, der die Quelle des Elementes X, die Quelle des Elementes T, die Quelle der organischen Struktur enthält.

15. Verfahren gemäß einem der Ansprüche 10 bis 14, **dadurch gekennzeichnet, daß** die organische Stickstoffverbindung Q aus den alkylierten Derivaten des Polymethylene α-ω diammoniums ausgewählt wird, die durch die Formel: R₁R₂R₃ N⁺ (CH₂)ₙ N⁺ R₄R₅R₆ definiert sind, n ist zwischen 3 und 14 und R₁ bis R₆ stehen für übereinstimmende oder unterschiedliche Alkylradikale oder Hydroxyalkylradikale, die 1 bis 8 Kohlenstoffatome haben, bis zu fünf Radikale R₁ bis Rᵢ können Wasserstoff sein.

16. Verfahren gemäß einem der Ansprüche 10 bis 15, **dadurch ge kennzeichnet,** daß es die Einführung wenigstens eines Alkalimetall-Salzes P oder von Ammonium umfaßt.

17. Verfahren gemäß einem der Ansprüche 10 bis 16, **dadurch ge kennzeichnet**, daß wässrige Mischung die folgende Zusammensetzung aufweist:
| | |
|---|---|
| XO₂/T₂O₃ | wenigstens 10 |
| OH⁻/XO₂ | 0,002 bis 2,0 |
| Q/XO₂ | 0,002 bis 2,0 |
| Q/(M⁺+Q) | 0,1 bis 1,0 |
| H₂O/XO₂ | 1 bis 500 |
| P/XO₂ | 0 bis 5 |
| S/XO₂ | 0 bis 0,1 |

18. Verfahren zur Herstellung eines Zeolithen gemäß einem der Ansprüche 1 bis 9, **dadurch gekennzeichnet**,daßmaneinenRoh-Synthese-Zeolithen zerkleinert, mit Wert Dv,90 der Aggregate größer als 100 µm.

19. Verwendung des Zeolithen vom Strukturtyp MTT gemäß einem der Ansprüche 1 bis 9 als Adsorbenz zur Kontrolle der Umweltverschmutzungs und als Molekularsieb zur Trennung.

20. Katalysator enthaltend einen MTT-Zeolithen gemäß einem der Ansprüche 1 bis 9 oder hergestellt gemäß einem der Ansprüche 10 bis 18.

21. Katalysator gemäß Anspruch 20, **dadurch gekennzeichnet, daß** er wenigstens ein Bindemittel eund wenigsten ein Metall der Gruppe VIII des Periodensystems der Elemente enthält.

22. Katalysator gemäß einem der Ansprüche 20 bis 21, **dadurch gekennzeichnet, daß** der Zeolith wenigstens zum Teil in der Säureform ist.

23. Verfahren zur Isomerisation von linearen Paraffinen mit 5 bis 10 Kohlenstoffatomen pro Molekül, durchgeführt in Gegenwart eines Katalysators gemäß einem der Ansprüche 20 bis 22, besagtes Verfahren ist **dadurch gekennzeichnet daß** es durchgeführt wird bei einer Temperatur zwischen 150°C und 350°C, Grenzen eingeschlossen, bei einem partiellen Wasserstoffdruck zwischen 0,1 und 7 Mpa Grenzen eingeschlossen, mit einer Volumengeschwindigkeit zwischen 0,2 und 10 Litern flüssigem Kohlenwasserstoff pro Liter Katalysator und pro Stunde, mit einem molaren Verhältnis von Wasserstoff/Beschickung am Reaktoreingang, welches wie das molare Verhältnis von Wasserstoff/Beschickung in dem den Reaktor verlassenden Ausfluß im allgemeinen größer als 0,01 ist.
